# EUROPEAN PATENT APPLICATION

(11) **EP 1 710 472 A1**
(43) Date of publication of application: **11.10.2006**
(21) Application number: 05704107.1
(22) Date of filing: 26.01.2005
(51) Int. Cl.: F16H 7/12

(54) **AUTO-TENSIONER FOR ACCESSORIES**

(30) Priority: 27.01.2004 JP 2004018591
(71) Applicant: NTN CORPORATION, Osaka-shi, Osaka 550-0003 (JP)
(72) Inventor: MINENO, Katsunori, Iwata-shi, Shizuoka 4388510 (JP); TANAKA, Tadahisa, Iwata-shi, Shizuoka 4388510 (JP); RYONO, Yoshiaki, Iwata-shi, Shizuoka 4388510 (JP)
(74) Representative: Grünecker, Kinkeldey, Stockmair & Schwanhäusser Anwaltssozietät
(86) International application number: PCT/JP2005/000965
(87) International publication number: WO 2005/071288

(57) **Abstract**

An auto-tensioner for engine accessories is proposed which can smoothly follow shrinkage and expansion of a belt and which can minimize the amplitude of vibration of the belt.

A seal member 13 is mounted to a cylinder 11 at its top open end. A rod 16 slidably extends through the seal member 13. A return spring 21 biases the rod 16 outwardly. A plunger 24 is slidably received in a sleeve 12 having a bottom and received in the cylinder 11, and is connected to the bottom of the rod 16. The plunger 24 has a passage 27 through which a lower pressure chamber 25 and an upper reservoir chamber 26 communicate with each other. A check valve 28 is provided at the passage 27. A return chamber 29 is defined under the sleeve 12 so as to communicate with the reservoir chamber 26. In the bottom of the sleeve 12, a valve hole 31 is formed through which the return chamber 29 communicates with the pressure chamber 25. A relief valve 32 is provided at the valve hole 31. The relief valve 32 prevents the pressure in the pressure chamber 25 from rising above a set pressure, thereby preventing an excessive increase in the tension of the belt. This makes it possible to reduce oil leak gaps defined between the sliding surfaces of the sleeve 12 and the plunger 24, thereby keeping the vibration amplitude of the belt. This improves the responsiveness of the auto-tensioner to the expansion of the belt while the relief valve 32 is open.

## Description

### TECHNICAL FIELD

This invention relates to an auto-tensioner for engine accessories for keeping a constant tension in a belt for driving engine accessories such as an alternator.

Ordinarily, a belt transmission system for driving engine accessories includes an auto-tensioner for keeping a constant tension in the accessory driving belt by applying an adjusting force to the belt.

Patent document 1 discloses an auto-tensioner for engine accessories of this type. The auto-tensioner disclosed in Patent document 1 includes a cylinder in which a sleeve having a bottom is received. A seal member such as an oil seal is mounted to the cylinder at its open top end to prevent leakage of hydraulic oil in the cylinder. A rod slidably extends through the seal member and is biased outwardly of the cylinder by a return spring. The pushing force applied to the rod from the belt is dampened by a hydraulic damper mounted in the cylinder.

The hydraulic damper includes a plunger slidably mounted in the sleeve and dividing the interior of the cylinder into a pressure chamber and a reservoir chamber. The plunger is formed with a passage through which the pressure chamber communicates with the reservoir chamber. A check valve is provided at the passage to close the passage when the pressure in the pressure chamber exceeds the pressure in the reservoir chamber. Thus, the pushing force applied to the rod is dampened by the hydraulic oil in the pressure chamber. When the pushing force applied to the rod exceeds the force of the return spring, hydraulic oil in the pressure chamber leaks through oil leak gaps formed between the sliding surfaces of the plunger and the sleeve into the reservoir chamber.

There are two types of auto-tensioners for engine accessories, i.e. ones in which the return spring is mounted around the cylinder and ones in which the return spring is mounted in the cylinder. By mounting the return spring around the cylinder, it is possible to reduce its spring constant while keeping a large spring load, so that the auto-tensioner can more smoothly follow fluctuations in the tension of the belt.
Patent document: JP utility model publication 5-10849A

### DISCLOSURE OF THE INVENTION

### PROBLEMS FOR WHICH THE INVENTION SEEKS A SOLUTION

In an auto-tensioner for engine accessories in which the return spring is mounted around the cylinder, because the belt tends to shrink and expand more markedly than timing belts, oil leak gaps are formed that are larger than oil leak gaps of auto-tensioners for timing belts to increase the amount of leakage of oil, thus suppressing the damping force of the hydraulic damper. This however reduces the yield strength of the auto-tensioner for engine accessories and results in increased vibration amplitude of the belt even under low loads.

An object of this invention is to provide an auto-tensioner for engine accessories which can smoothly follow shrinkage and expansion of the belt and which can minimize the amplitude of vibration of the belt.

### MEANS TO ACHIEVE THE OBJECT

According to the present invention, there is provided an auto-tensioner for engine accessories comprising a cylinder having an open top end, a sleeve having a bottom and inserted in the cylinder, a seal member mounted to the cylinder at the open top end to prevent leakage of hydraulic oil in the cylinder, a rod slidably extending through the seal member, a plunger connected to a bottom end of the rod so as to be slidable in the sleeve, the plunger defining a reservoir chamber and a pressure chamber in the cylinder over and under the plunger, respectively, and having a passage through which the pressure chamber communicates with the reservoir chamber, a check valve provided at the passage to close the passage when the pressure in the pressure chamber exceeds the pressure in the reservoir chamber, and a return spring mounted around the cylinder to bias the rod outwardly of the cylinder, characterized in that a return chamber is defined under the sleeve so as to communicate with the reservoir chamber, the bottom of the sleeve being formed with a valve hole through which the return chamber communicates with the pressure chamber, the auto-tensioner further comprising a relief valve provided at the valve hole to open the valve hole if the pressure in the pressure chamber exceeds a set pressure.

### ADVANTAGES OF THE INVENTION

By forming the valve hole in the bottom of the sleeve, and providing the relief valve at the valve hole, even if the oil leak gap defined between the sliding surfaces of the sleeve and the plunger is reduced to reduce the amount of oil leakage, thereby increasing the damping force of the hydraulic damper, by opening the relief valve, it is possible to effectively absorb expansion of the belt due to fluctuations in loads on engine accessories or the revolving speed of the engine. This improves the responsiveness of the auto-tensioner for engine accessories according to the invention.

While the relief valve is closed, the belt is pressed by the return spring having a large spring constant, so that the vibration amplitude of the belt is kept low.

When the tension in the belt increases, the rod is pushed into the cylinder. If the pressure in the pressure chamber due to the pushing force applied to the rod exceeds the set pressure of the relief valve, the relief valve opens, thus preventing an excessive increase in the tension of the belt when fluctuations in revolving speed of the engine is large while the engine revolving speed is low. Also, by applying a pushing force to the rod which is large enough to produce a pressure in the pressure chamber higher than the set pressure of the relief valve, the rod can be smoothly pushed into the cylinder, so that the engine accessory driving belt can be easily replaced.

### BRIEF DESCRIPTION OF THE DRAWINGS

Fig. 1 is a front view of a belt tension adjusting device including an auto-tensioner for engine accessories according to the present invention;
Fig. 2 is a vertical sectional front view of the auto-tensioner shown in Fig. 1;
Fig. 3 is a partial enlarged sectional view of the auto-tensioner of Fig. 2 showing its portion where a relief valve is mounted; and
Fig. 4 is a sectional view taken along line IV-IV of Fig. 3.

### DESCRIPTION OF NUMERALS

11 Cylinder
12 Sleeve
13 Seal member
16 Rod
21 Return spring
24 Plunger
25 Pressure chamber
26 Reservoir chamber
27 Passage
28 Check valve
29 Return chamber
31 Valve hole
32 Relief valve

### BEST MODE FOR EMBODYING THE INVENTION

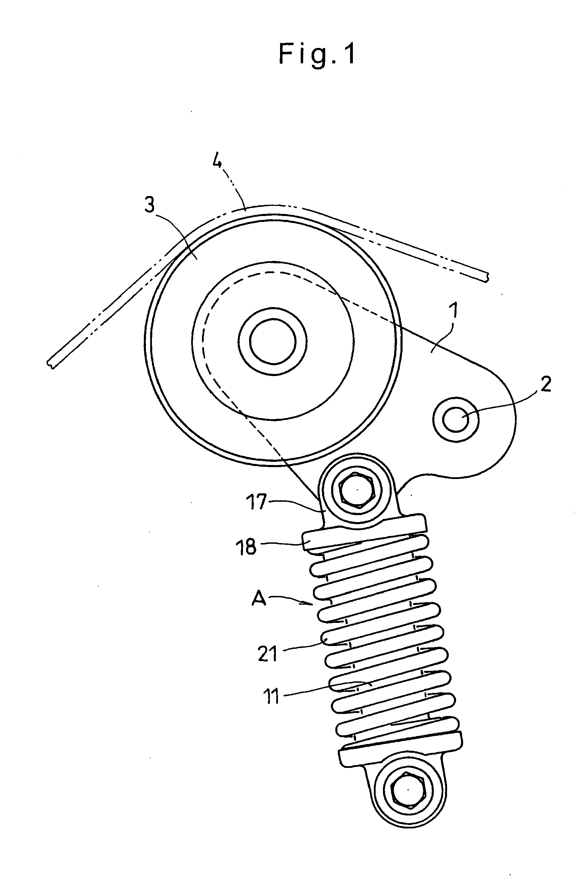

The embodiment of the present invention is now described with reference to the drawings. Fig. 1 shows a belt tension adjusting device including an auto-tensioner A for engine accessories according to the present invention. The tension adjusting device includes a pulley arm 1 pivotable about a shaft 2. An adjusting force of the auto-tensioner A for engine accessories is applied to the pulley arm 1 to press a tension pulley 3 rotatably supported by the pulley arm 1 against an engine accessory driving belt 4.

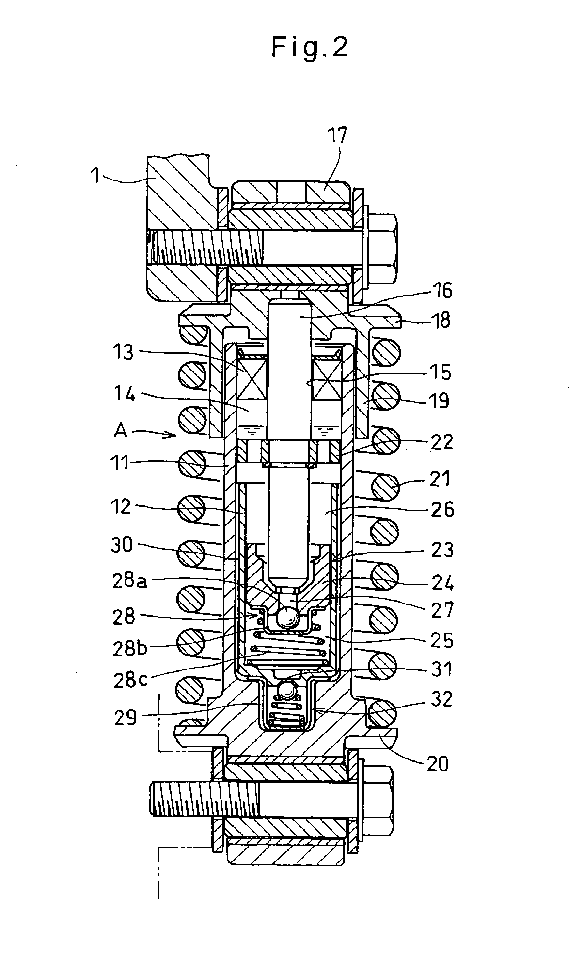

Referring to Fig. 2, the auto-tensioner A for engine accessories includes a cylinder 11 made of aluminum alloy and having a closed bottom, and a steel sleeve 12 having a closed bottom and received in the cylinder 11.

A seal member 13 in the form of an oil seal is mounted to the cylinder 11 near its top opening. An air gap 14 is present in the cylinder 11 between the seal member 13 and hydraulic oil in the cylinder 11.

The seal member 13 has a rod inserting hole 15 through which a rod 16 slidably extends. An arm coupling piece 17 coupled to the pulley arm 1 is mounted to the top of the rod 16.

The arm coupling piece 17 includes a spring seat 18 and a cylindrical dust cover 19 surrounding the outer periphery of the cylinder 11 at its top portion. A return spring 21 is mounted between the spring seat 18 and a spring seat 20 provided on the outer periphery of the cylinder 11 at its lower portion to bias the rod 16 outwardly of the cylinder 11.

A wear ring 22 is mounted to a portion of the rod 16 disposed inside the cylinder 11. The wear ring 22 is in sliding contact with the inner periphery of the cylinder 11, thereby supporting the intermediate portion of the rod 16.

A hydraulic damper 23 is mounted in the cylinder 11 for dampening the pushing force applied to the rod 16.

The hydraulic damper 23 includes a plunger 24 slidable along the inner periphery of the sleeve 12 and connected to the bottom of the rod 16. The plunger 24 divides the interior of the cylinder 11 into a pressure chamber 25 and a reservoir chamber 26. The plunger 24 is formed with a passage 27 through which the pressure chamber 25 communicates with the reservoir chamber 26. A check valve 28 is provided at the passage 27.

The check valve 28 comprises a check ball 28a for closing and opening the passage 27, a retainer 28b for restricting the degree of opening of the passage 27 by the check ball 28a, and a plunger spring 28c biasing the retainer 28b against the bottom surface of the plunger 24. The check valve 28 is configured to close the passage 27 when the pressure in the pressure chamber 25 exceeds the pressure in the reservoir chamber 26.

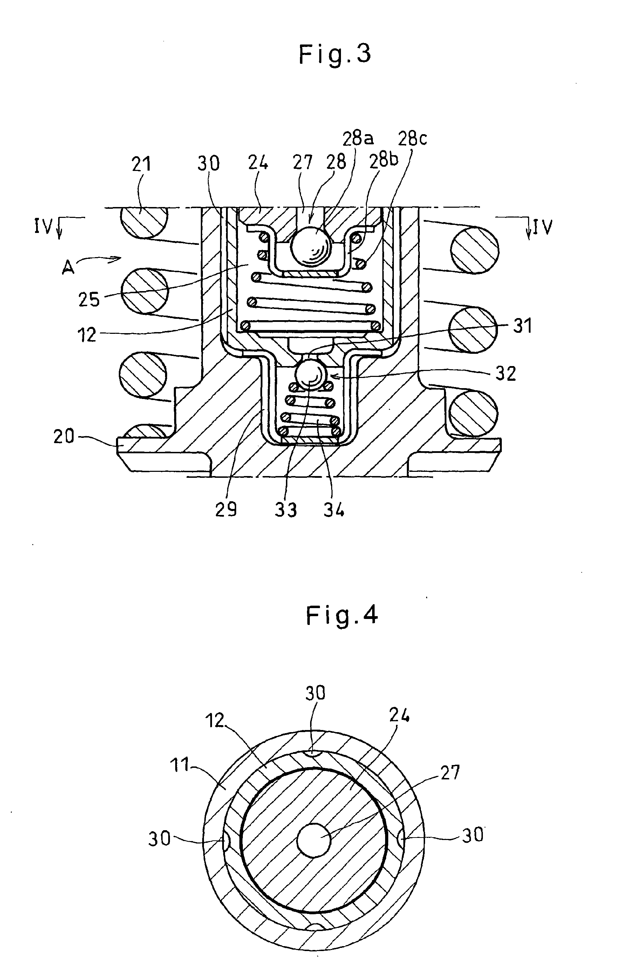

As shown in Figs. 2 and 3, a return chamber 29 is formed in the inner bottom surface of the cylinder 11 under the bottom end of the sleeve 12. The return chamber 29 communicates with the reservoir chamber 26 through a plurality of axial grooves formed in the outer periphery of the sleeve 12.

But instead, the return chamber 29 may be communicated with the reservoir chamber 26 through a plurality of axial grooves formed in the inner periphery of the cylinder 11.

In the bottom of the sleeve 12, a valve hole 31 is formed through which the pressure chamber 25 communicates with the return chamber 29. A relief valve 32 is provided at the valve hole 31. The relief valve 32 comprises a ball 33 for closing and opening the valve hole 31, and a spring 34 biasing the ball 33 toward the valve hole 31. The relief valve 32 is configured to open the valve hole 31 when the pressure in the pressure chamber 25 exceeds a set pressure.

In this auto-tensioner for engine accessories, when the belt 4, shown in Fig. 1, slackens, the rod 16 is pushed out of the cylinder 11 under the biasing force of the return spring 21, thus pivoting the pulley arm 1 about the shaft 2 in a direction to re-tension the belt 4.

When the rod 16 is pushed out of the cylinder 11, the plunger 24 is moved together with the rod 16, so that the pressure in the pressure chamber 25 falls below the pressure in the reservoir chamber 26. The passage 27 is thus opened by the check valve 28, allowing hydraulic oil in the reservoir chamber 26 to smoothly flow into the pressure chamber 25 through the passage 27. The rod 16 can thus quickly move outwardly, thus instantly re-tensioning the belt 4.

When the tension in the belt 4 increases, the rod 16 is pushed into the cylinder 11 by the belt 4 through the pulley arm 1. The pressure in the pressure chamber 25 thus exceeds the pressure in the reservoir chamber 26, which causes the passage 27 to be closed by the check valve 28. The pushing force applied to the rod 16 is thus dampened by the hydraulic oil in the pressure chamber 25.

When the pushing force applied to the rod 16 exceeds the force of the return spring 21, hydraulic oil in the pressure chamber 25 flows through minute gaps formed between the sliding surfaces of the sleeve 12 and the plunger 24 into the reservoir chamber 26. The plunger and the rod 16 thus move slowly until the pushing force balances with the force of the return spring 21.

The pressure of the hydraulic oil in the pressure chamber 25 gradually increases with the pushing force applied to the rod 16. If the pressure in the pressure chamber 25 exceeds the set pressure of the relief valve 32, the relief valve 32 opens the valve hole 31, allowing hydraulic oil in the pressure chamber 25 to flow through the valve hole 31 into the return chamber 29, and then into the reservoir chamber 26 through the passages 30. This prevents the pressure in the pressure chamber 25 from exceeding the set pressure of the relief valve 32, thus preventing an excessive increase in the tension of the belt 4.

By providing the relief valve 32, which keeps the pressure in the pressure chamber 25 below the set pressure, it is possible to prevent an excessive increase in the tension of the belt 4. This in turn makes it possible to reduce the minute gaps formed between the sliding surfaces of the sleeve 12 and the plunger 24, thereby increasing the time during which hydraulic oil leaks through the minute gaps. Thus, it is possible to press the belt 4 with a high spring constant while the relief valve 32 is closed, thereby minimizing the amplitude of vibration of the belt 4.

While the relief valve 32 is open, the belt 4 is pressed with a smaller spring constant. Thus, the auto-tensioner for engine accessories according to the present invention can smoothly follow fluctuations in tension of the belt 4 due to fluctuations in the load on the engine accessories.

In order to replace the belt 4 with a new one, the rod 16 is pushed into the cylinder 11 by pressing the tension pulley 3 so that tension pulley 3 is not pressed against the belt 4. In this state, the belt 4 is replaced.

When the rod 16 is pushed into the cylinder 11 to replace the belt 4, the pressure in the pressure chamber 25 exceeds the set pressure of the relief valve 32 due to the pushing force applied to the rod 16. The valve hole 31 is thus opened by the relief valve 32, so that hydraulic oil in the pressure chamber 25 flows through the valve hole 31 into the return chamber 29. The rod 16 can thus be smoothly pushed into the cylinder 11.

Because the auto-tensioner for engine accessories according to the present invention can be shrunk by applying a pushing force greater than the set pressure of the relief valve 32 to the rod 16, replacement of the belt 4 is extremely easy.

## Claims

1. An auto-tensioner for engine accessories comprising a cylinder having an open top end, a sleeve having a bottom and inserted in said cylinder, a seal member mounted to said cylinder at said open top end to prevent leakage of hydraulic oil in said cylinder, a rod slidably extending through said seal member, a plunger connected to a bottom end of said rod so as to be slidable in said sleeve, said plunger defining a reservoir chamber and a pressure chamber in said cylinder over and under said plunger, respectively, and having a passage through which said pressure chamber communicates with said reservoir chamber, a check valve provided at said passage to close said passage when a pressure in said pressure chamber exceeds a pressure in said reservoir chamber, and a return spring mounted around said cylinder to bias said rod outwardly of said cylinder, **characterized in that** a return chamber is defined under said sleeve so as to communicate with said reservoir chamber, said bottom of said sleeve being formed with a valve hole through which said return chamber communicates with said pressure chamber, said auto-tensioner further comprising a relief valve provided at said valve hole to open said valve hole if the pressure in said pressure chamber exceeds a set pressure.
